# EUROPÄISCHE PATENTSCHRIFT

(11) **EP 0 309 892 B1**
(45) Veröffentlichungstag und Bekanntmachung des Hinweises auf die Patenterteilung: **18.08.1993**
(21) Anmeldenummer: 88115517.0
(22) Anmeldetag: 22.09.1988
(51) Int. Cl.: H02M 3/335, H02M 3/338

(54) **Schaltnetzteil**
Switching power supply
Alimentation de puissance à découpage

(30) Priorität: 30.09.1987 DE 3733474
(43) Veröffentlichungstag der Anmeldung: 05.04.1989
(73) Patentinhaber: Deutsche Thomson-Brandt GmbH, 78003 Villingen-Schwenningen (DE)
(72) Erfinder: Rilly, Gerard, Dr. Ing., D-7731 Unterkirnach (DE); Rodriguez, Josè, D-7730 Villingen (DE)

(56) Entgegenhaltungen:
- EP-A- 0 144 754
- PATENT ABSTRACTS OF JAPAN vol. 7, no. 93 (P-192)(1238) 19 April 1983,& JP-A-58 019926 (MATSUSHITA) 05 Februar 1983
- PATENT ABSTRACTS OF JAPAN vol. 12, no. 246 (E-632)(3093) 12 Juli 1988, & JP-A-63 035171 (INTERNATL. RECTIFIER CORP. JAPAN LTD) 15 Februar 1988
- ELECTRONIC ENGINEERING. vol. 60, no. 738, 1988, LONDON GB Seite 25; L. SAGE et al: "Power supply current control technique"

## Beschreibung

Die Erfindung betrifft ein Schaltnetzteil zur Erzeugung verschiedener Betriebsspannungen aus der Netzspannung, insbesondere für Fernsehempfänger, Videorecorder, Personalcomputer und dgl.

Ein Schaltnetzteil enthält im allgemeinen einen Schalttransistor, der über die Arbeitswicklung eines zur Spannungstransformation und zur Netztrennung dienenden Transformators an eine aus der Netzspannung gewonnene Betriebsspannung angeschlossen ist. Der Schalttransistor wird durch eine Steuerspannung periodisch leitend gesteuert und gesperrt. Die Steuerspannung kommt z.B. von einem auf der Primärseite vorgesehenen Oszillator oder wird von der Sekundärseite über einen vom Transformator getrennten Übertrager auf die Primärseite übertragen. Die Steuerspannung ist vorzugsweise im Sinne einer Pulsweitenmodulation (PWM) in Abhängigkeit von der Amplitude der sekundärseitig erzeugten Betriebsspannungen so moduliert, daß die Stromflußdauer durch den Schalttransistor geändert und die Betriebsspannungen stabilisiert werden.

Bei einem derartigen Schaltnetzteil können im Störungsfall, z.B. bei zu großer Belastung der sekundärseitigen Gleichrichterschaltungen, bei Kurzschluß, bei Ausfall von Bauteilen oder bei einer Unterbrechung der Regelschaltung, am Schalttransistor und am Transformator unzulässig hohe Ströme und Spannungen auftreten, die die Bauteile, insbesondere den Schalttransistor und den Transformator, gefährden.

Während der Stromflußdauer durch die Arbeitswicklung und den Schalttransistor wird in dem Transformator Energie in Form des durchfließenden Stromes gespeichert. Nach der Sperrung des Schalttransistors wird diese Energie durch einen induzierten Impuls an den Sekundärwicklungen und einen entsprechenden Ladestrom in die Ladekondensatoren der sekundärseitigen Gleichrichterschaltungen übertragen. Der Transformator wird also während dieser Zeit "entladen", bis der Strom am Transformator auf null abgeklungen ist. Danach wird der Schalttransistor wieder leitend gesteuert und der Transformator erneut mit Energie in Form des Stromes durch die Arbeitswicklung "geladen". Bei einer einwandfreien Wirkungsweise ist also jeweils der Transformator entladen, wenn er durch Einschalten des Schalttransistors neu geladen wird. Im Störungsfall kann es vorkommen, daß der Entladestrom des Transformators relativ lange fließt und nicht während der gewünschten Zeitdauer auf null abfällt. Dann tritt der Fall ein, daß zum Zeitpunkt des Einschaltens des Schalttransistors der Transformator neu geladen wird, obwohl er noch nicht endladen ist. Dieser Zustand ist unerwünscht und gefährlich, weil dann am Transformator zu hohe Ströme und Spannungen auftreten können. Auch durch sonstige Störungsfälle der beschriebenen Art können am Transformator zu hohe Ströme und Spannungen auftreten, die die beschriebene Gefährdung von Bauteilen hervorrufen.

Der Erfindung liegt die Aufgabe zugrunde, mit einfachen Schaltungsmitteln das Schaltnetzteil so auszubilden, daß ein sicherer Schutz der Bauteile wie insbesondere des Transformators und des Schalttransistors im Störungsfall erreicht wird.

Diese Aufgabe wird durch die in dem unabhängigen Anspruch beschriebene Erfindung gelöst.

Es ist auch ein Schaltnetzteil bekannt (Patent Abstract of Japan, Vol. 12, Nr. 246), bei dem im Emitterweg des Schalttransistors ein Strommeßwiderstand liegt, dessen Spannungsabfall dann, wenn der Strom durch den Schaltransistor einen bestimmten Wert überschreitet, die Frequenz des die Schaltspannung für den Schalttransistor erzeugenden Oszillators verringert, um dann die von der Primärseite zur Sekundärseite des Transformators übertragene Leistung zu reduzieren.

Es ist ferner ein Schaltnetzteil bekannt (Electronic Engineering, Juni 88, Nr. 738, Seite 25), bei dem die Spannung an einem Strommeßwiderstand im Emitterweg des Schalttransistors differenziert und gleichgerichtet und die dadurch gewonnene Regelspannung zu einer Verkürzung der Einschaltzeit des Schalttransistors ausgenutzt wird.

Es ist auch ein Schaltnetzteil bekannt (EP-A-0 144 754), bei dem aus einer Impulsspannung an der Sekundärwicklung des Schaltnetzteils durch Gleichrichtung eine Regelspannung gewonnen wird, die bei Detektierung eines Fehler einen zusätzlichen Oszillator aktiviert.

Die Erfindung beruht auf folgender Überlegung. Die aus der Impulsspannung am Transformator gewonnene Regelspannung wird im Falle einer Störung wegen der zusammenbrechenden Impulsamplitude am Transformator kleiner werden. Deshalb wird diese Regelspannung, die an sich zur Stabilisierung der erzeugten Betriebsspannungen dient, zusätzlich dazu ausgenutzt, die Frequenz der den Schalttransistor einschaltenden und sperrenden Steuerspannung, d.h. die Arbeitsfrequenz des Schaltnetzteiles, zu verringern. Eine geringere Frequenz bedeutet eine längere Periodendauer und damit einen größeren Abstand zwischen den Zeitpunkten, in denen der Schalttransistor erneut eingeschaltet wird. Der Tatsache, daß im Störungsfall die Entladung des Transformators länger dauert, wird also in vorteilhafter Weise durch eine längere Periodendauer der Steuerung des Schalttransistors Rechnung getragen. Dadurch kann verhindert werden, daß der Schalttransistor in unerwünschter Weise wieder eingeschaltet wird, bevor der Transformator entladen ist. Vorzugsweise wird als Regelspannung für die Änderung der Arbeitsfrequenz eine ohnehin vorhandene Regelspannung ausgenutzt, die zur Stabilisierung der erzeugten Betriebsspannungen die Einschaltdauer des Schalttransistors z.B. durch eine Pulsweitenmodulation der Steuerspannung beeinflußt. Der schaltungstechnische Mehraufwand ist daher gering und besteht im wesentlichen nur darin, daß der die Regelspannung führende Schaltungspunkt zusätzlich an eine Frequenzsteuerklemme des die Steuerspannung erzeugenden Oszillators angeschlossen ist.

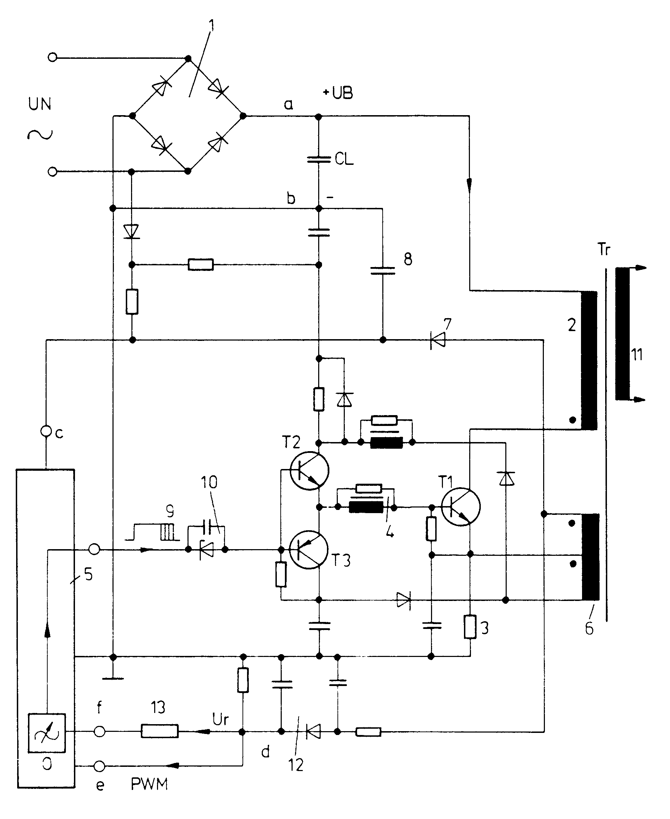

Die Erfindung wird im folgenden anhand der Zeichnung näher erläutert. Die Fig. zeigt in vereinfachter Form die Primärseite eine Schaltnetzteils.

In der Fig. wird aus der Netzspannung UN, die sich zwischen 90 V und 260 V ändern kann, mit dem Netzgleichrichter 1 die Betriebsspannung UB zwischen den Punkten a und b gewonnen, die über die Arbeitswicklung 2 des Transformators Tr an den Schalttransistor T1 angelegt ist. Der Emitter des Schalttransistors T1 ist über den niederohmigen Widerstand 3 mit der primärseitigen Erde verbunden. Der Schalttransistor T1 wird von der Treiberschaltung mit den Transistoren T2, T3 über das Netzwerk 4 gesteuert. Auf der Primärseite ist die Steuerschaltung 5 mit einem Oszillator O vorgesehen. Diese erhält an der Klemme c eine Betriebsspannung, die durch Gleichrichtung der an der Wicklung 6 stehenden Impulsspannung mit dem Gleichrichter 7 und dem Kondensator 8 gewonnen ist. Die Steuerschaltung 5 liefert die Steuerspannung 9, die über das Netzwerk 10 die Transistoren T2, T3 steuert und dadurch den Schalttransistor T1 periodisch leitend steuert und sperrt. Dadurch werden am Transformator Tr Spannungsimpulse erzeugt, aus denen mit einer oder mehreren Sekundärwicklungen 11 und angeschlossenen Gleichrichterschaltungen Betriebsspannungen verschiedener Größe und Polarität erzeugt werden.

Durch Gleichrichtung der an der Wicklung 6 stehenden Impulsspannung mit der Gleichrichterschaltung 12 wird am Punkt d eine Regelspannung Ur gewonnen, die ein Maß für die Größe Impulsspannung am Transformator Tr ist. Diese Regelspannung gelangt an die Klemme e der Steuerschaltung 5 und bewirkt dort eine Impulsweitenmodulation der Steuerspannung 9 zur Stabilisierung der sekundärseitig erzeugten Betriebsspannungen. Die soweit beschriebene Schaltung ist bekannt.

Die Regelspannung Ur ist zusätzlich über den Widerstand 13 an die Klemme f der Steuerschaltung 5 angelegt. Die Spannung an der Klemme f bewirkt eine Änderung der Frequenz des Oszillators O innerhalb der Steuerschaltung 5 und somit der Steuerspannung 9 in dem Sinne, daß bei sinkender Regelspannung Ur die Frequenz der Steuerspannung 9 abnimmt. Im Falle einer Störung der beschriebenen Art, z.B. Kurzschluß an den sekundärseitigen Gleichrichterschaltungen, zu starker Belastung dieser Schaltungen, Ausfall eines Bauteiles, Unterbrechung einer Wicklung am Transformator Tr und dgl., sinkt die Amplitude der am Transformator Tr wirksamen Impulsspannung. Dadurch wird die Regelspannung Ur kleiner, also weniger positiv. Dadurch wird die Periodendauer der Steuerspannung 9 entsprechend vergrößert, so daß in erwünschter Weise der Schalttransistor T1 erst nach einer längeren Zeit von 0,4ms wieder eingeschaltet wird, während die Periodendauer bei störungsfreiem Betrieb der Schaltung etwa 20µs. beträgt. Durch diese dem Störungsfall und der verlängerten Entladezeit des Transformators Tr angepaßte erhöhte Periodendauer der Steuerspannung 9 wird vermieden, daß der Schalttransistor T1 noch vor der vollständigen Entladung des Transformators Tr erneut eingeschaltet wird und eine Gefährdung der Bauteile wie insbesondere von Tr und T1 eintritt. Die Änderung der Frequenz der Steuerspannung 9 erfolgt vorzugsweise kontinuierlich durch die Regelspannung Ur und kann alle Zwischenwerte zwischen der minimalen Periodendauer von 20µs entsprechend 50kHz und der im Störungsfall vorliegenden maximalen Periodendauer von 0,4ms entsprechend 2,5 kHz einnehmen.

## Patentansprüche

1. Schaltnetzteil nach dem Sperrwandler-Prinzip mit einem Transformator (Tr) und einem mit dessen Primärwicklung (2) in Reihe geschalteten Schalttransistor (T1), der von einer einen Oszillator (O) enthaltenden Steuerschaltung (5) mit einer Steuerspannung (9) periodisch leitend gesteuert und gesperrt wird, wobei aus der Impulsspannung an einer Sekundärwicklung (6) des Transformators (Tr) über einen Gleichrichter (12) eine Regelspannung (Ur) gewonnen wird, die an eine Steuerklemm (e) der Steuerschaltung (5) zur Erzeugung der durch die Regelspannung (Ur) impulsweitenmodulierten Steuerspannung (9) angelegt ist, **dadurch gekennzeichnet,** daß die Regelspannung (Ur) zusätzlich an eine die Frequenz des Oszillators (O) beeinflussende Frequenzsteuerklemme (f) der Steuerschaltung ((5) derart angelegt ist, daß die Frequenz der Steuerspannung (9) mit sinkender Regelspannung (Ur) bei einem Störungsfall durch Überlastung abnimmt.

## Claims

1. Switched power supply in accordance with the blocking converter principle having a transformer (Tr) and, connected in series with its primary winding (2), a switching transistor (T1) which is controlled to be periodically conducting and blocked by means of a control voltage (9) from a control circuit (5) containing an oscillator (O), wherein a regulating voltage (Ur), which is applied to a control terminal (e) of the control circuit (5) for the production of the control voltage (9) pulse width modulated by the regulating voltage (Ur), is obtained from the pulse voltage on a secondary winding (6) of the transformer (Tr) via a rectifier (12), characterised in that, the regulating voltage (Ur) is additionally applied to a frequency control terminal (f) of the control circuit (5) influencing the frequency of the oscillator (O) in such a way that the frequency of the control voltage (9) decreases with a falling regulating voltage (Ur) in the case of a disturbance due to overloading.

## Revendications

1. Bloc d'alimentation et de commutation selon le principe du convertisseur à oscillateur bloqué avec un transformateur (Tr) et un transistor de commutation (T1), monté en série avec l'enroulement primaire (2) de celui-ci, qui est commandé pour être conducteur et bloqué périodiquement par un circuit de commande (5), qui contient un oscillateur (O), avec une tension de commande (9), une tension de réglage (Ur) étant obtenue à partir de la tension d'impulsion sur un enroulement secondaire (6) du transformateur (Tr) par l'intermédiaire d'un redresseur (12), tension de réglage qui est appliquée à une borne de commande (e) du circuit de commande (5) pour produire la tension de commande (9) dont la largeur des impulsions est modulée par la tension de réglage (Ur), **caractérisé en ce** que la tension de réglage (Ur) est, en plus, appliquée à une borne de commande de la fréquence (f) du circuit de commande (5) qui influence la fréquence de l'oscillateur (O) de telle manière que la fréquence de la tension de commande (9) diminue lorsque la tension de réglage (Ur) baisse, lors d'une perturbation dûe à une surcharge.
